# EUROPÄISCHE PATENTSCHRIFT

(11) **EP 1 469 140 B1**
(45) Veröffentlichungstag und Bekanntmachung des Hinweises auf die Patenterteilung: **25.03.2009**
(21) Anmeldenummer: 03008692.0
(22) Anmeldetag: 16.04.2003
(51) Int. Cl.: E04F 15/04, B32B 21/13, B27N 3/14

(54) **Verfahren zur Herstellung eines Bauelements mit einer Trägerplatte aus einem Holzwerkstoff**
Process for production of a panel with a core of a wood-based material
procédé pour la fabrication d'un panneau avec un support en bois reconstitué

(43) Veröffentlichungstag der Anmeldung: 20.10.2004
(73) Patentinhaber: E.F.P. Floor Products Fussböden GmbH, 6380 St. Johann in Tirol (AT)
(72) Erfinder: Pletzer Stefan, 6382 Kirchdorf (AT); Schiegl Walter, 6380 St. Johann in Tirol (AT); Steinwender Martin, 2380 Perchtoldsdorf (AT)
(74) Vertreter: Cohausz & Florack

(56) Entgegenhaltungen:
- EP-A- 0 346 864
- DE-A- 4 412 515
- DE-A- 4 436 834
- DE-A- 10 038 662
- DE-A- 10 118 385
- FR-A- 2 568 510
- US-A- 5 425 976

## Beschreibung

Die Erfindung betrifft ein Verfahren zur Herstellung eines Bauelements mit einer Trägerplatte aus einem Holzwerkstoff, wobei die Trägerplatte eine Mittelschicht aufweist, wobei die Trägerplatte eine obere Schicht und eine untere Schicht aufweist, wobei die Mittelschicht aus einem Spanplattenmaterial hergestellt ist und wobei die obere Schicht und die untere Schicht aus Holzfasermaterial, insbesondere MDF-Material oder HDF-Material hergestellt sind.

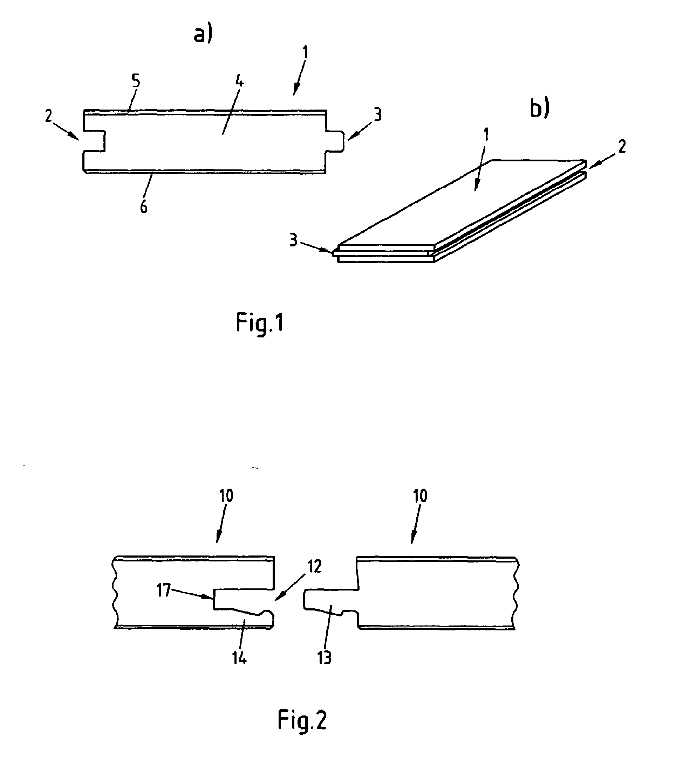

Es ist bekannt, für Hartbodenbeläge wie z.B. Laminatfußboden oder Parkettböden als Kernmaterial einen Holzwerkstoff wie Spanplatte oder Faserplatte zu verwenden. Ein solcher Hartbodenbelag besteht aus einer Vielzahl einzelner Elemente, sogenannter Dielen, wie es Fig. 1 zeigt.

Wie in Fig. 1 dargestellt, verfügt die Diele 1 über eine an jeweils 2 Seiten umlaufende Nut 2 bzw. Feder 3, die es erlauben, durch Zusammenfügen mehrerer Elemente einen großflächigen Bodenbelag zu erzeugen. Die Nuten 2 und Federn 3 können wie in Fig. 1 ausgebildet sein, wobei für das nachhaltige Vereinen mehrerer Dielen ein Klebstoff im Nut-Feder-Bereich aufgebracht wird.

Eine Diele besteht aus einem Trägermaterial 4, welches in der Regel eine Spanplatte oder eine Faserplatte (insbesondere mitteldichte Faserplatte MDF oder hochdichte Faserplatte HDF) sein kann. Das Trägermaterial verfügt über eine obere Beschichtung 5 und eine untere Beschichtung 6. Die Beschichtung 5 gibt dem Boden das optische Aussehen und kann aus einer Echtholzauflage wie z.B. einem Furnier bestehen, eine dekorative Beschichtung mit einem Laminat ist ebenso möglich. Unter Laminat versteht man in diesem Zusammenhang eine Beschichtung aus einem bedruckten Papier, das mit zumindest einem Tränkharz auf Basis eines Formaldehyd-Kondensationsharz imprägniert ist und unter Einwirkung von Druck und Temperatur eine hochbelastbare Oberflächenbeschichtung ergibt.

Eine andere Ausbildungsform nach dem Stand der Technik zeigt die Fig. 2, wobei hier mechanische Verbindungsmittel eine nachhaltig wirkende Verbindung der einzelnen Dielen ermöglichen. Man spricht in diesem Zusammenhang auch von mechanisch verriegelbaren Fußbodenpaneelen. Es ist verständlich, dass für das Zusammenführen solcher Art ausgebildeter Nuten und Federn sehr hohe Anforderungen an den Trägerwerkstoff gestellt werden.

Zum einen muss er eine hochpräzise Herstellung der Profilausformung mit Toleranzen bspw. im 1/100 mm Bereich ermöglichen. Weiterhin muss er über eine entsprechende Oberflächenruhe verfügen, so dass sich insbesondere für Laminatfußböden keine Unebenheiten, die vom Trägerwerkstoff kommen, beim fertigen Produkt abzeichnen. Eine hohe Druckfestigkeit der Oberfläche des Trägerwerkstoffes wiederum wirkt sich positiv auf die Gebrauchstauglichkeit aus, so dass bei stoßweiser Belastung des Bodenbelages die Oberflächenbeschichtung durch den darunter liegenden Trägerwerkstoff wirkungsvoll unterstützt werden kann. All diese Anforderungen können von einer HDF-Platte als Trägerwerkstoff erfüllt werden. Ein Nachteil sind die herstellungsbedingt hohen Kosten bei einer solchen Platte im Vergleich zu einer Spanplatte.

Eine Spanplatte wiederum verfügt neben den geringeren Kosten auch über Vorteile hinsichtlich der Elastizität. Beim Einrasten von Profilen, welche die Figur 2 beispielhaft zeigt, muss die Feder 13 beziehungsweise das Rastorgan 14 entsprechend elastisch ausweichen können, ohne dabei geschädigt zu werden. Durch das gegenseitige Ineinandergleiten der Nut 12 und der Feder 13 kommt es im Nutgrund 17 zu einer hohen Kerbspannung, die zu einer Rissbildung führen kann. Solche Risse sind von HDF-Platten bekannt, wurden überraschenderweise bei Spanplatten aber kaum beobachtet.

Die Offenporigkeit der Spanplatte im Gegensatz zur MDF-Platte erlaubt beim Verkleben von Dielen dem Klebstoff, welcher in der Regel ein Polyvinylacetat-Dispersionklebstoff (Weißleim) ist, das Wasser an den Trägerwerkstoff besser abzugeben, ohne dass dieser einer hohen ungewollten Quellung unterworfen wird.

Aus der DE 101 18 385 A1, von der die vorliegende Erfindung ausgeht, geht ein Bauelement für den Innenausbau mit einer Trägerplatte aus einem Holzwerkstoff hervor, wobei die Trägerplatte eine Mittelschicht aufweist, wobei die Trägerplatte eine obere Schicht und eine untere Schicht aufweist, wobei die Mittelschicht aus einem Spanplattenmaterial hergestellt ist und wobei die obere Schicht und die untere Schicht aus Holzfasermaterial, insbesondere MDF-Material oder HDF-Material hergestellt sind. Bei dem bekannten Bauelement bilden die obere und untere Schicht sowie die Mittelschicht jeweils separate Platten, die zur Bildung des Bauelements miteinander verklebt sind. Man spricht in diesem Zusammenhang auch von der sogenannten SandwichBauweise.

Bei den bekannten Bauelementen ist es von Nachteil, dass ihre Herstellung mit erheblichen Mehrkosten verbunden ist, wodurch eine wirtschaftliche Verwendung der Bauelemente für eine Vielzahl von Anwendungen ausgeschlossen ist.

Ferner ist aus der DE 44 36 834 A1 ein Herstellungsverfahren für Spanplatten bestehend aus Schichten unterschiedlicher Spangrößen bekannt. Um den Anteil feinerer Späne bei sogenannten dreischichtigen Spanplatten verringern zu können, werden bei dem bekannten Verfahren zunächst eine obere Spanplattenhälfte und eine untere Spanplattenhälfte dadurch erzeugt, dass während des Pressens zwischen beiden Hälften ein Stahlblech eingebettet wird. Die Spanplattenhälften werden dann einzeln nachbearbeitet und anschließend miteinander verklebt.

Aus der DE-A-10038662 geht ein Fußbodenpaneel hervor, das aus einem HDF-Kern mit je einer Deck- und einer Grundschicht besteht, zudem weist das Fußbodenpaneel stirnseitig an einander gegenüberliegenden Seiten eine Nut und eine Feder auf, so dass zwei baugleiche Fußbodenpaneele beim Verlegen miteinander verrastet werden können.

Die DE 44 12 515 A1 offenbart ein Verfahren zum Herstellen von mehrschichtigen Platten gemäß der Oberbegriff des Anspruchs 1, bei dem zerkleinertes Ausgangsmaterial mit einem Bindemittel vermischt und in Form eines Vlieses abgelegt wird, das in Dickenrichtung zusammengepresst und gleichzeitig zur formbeständigen Aushärtung beheizt wird. Das Gemisch aus Bindemittel und zerkleinertem Ausgangsmaterial wird noch vor der Bildung des Vlieses einer Vorwärmung unterzogen.

Der vorliegenden Erfindung liegt daher das technische Problem zugrunde, ein Verfahren zur Herstellung eines Bauelements mit einer Trägerplatte aus einem Holzwerkstoff anzugeben, das eine wirtschaftliche Verwendung des Bauelements auch als Fußbodenelement ermöglicht, ohne dass auf eine erhöhte Festigkeit verzichtet werden muss.

Das zuvor aufgezeigte technische Problem wird erfindungsgemäß durch ein Verfahren mit den Merkmalen des Anspruches 1 gelöst. Weitere Ausgestaltungen der Erfindung sind Gegenstand der Unteransprüche.

Das Bauelement weist eine Trägerplatte aus einem Holzwerkstoff, eine obere Deckschicht und eine Gegenzugschicht auf. Die Trägerplatte weist eine Mittelschicht sowie eine obere Schicht und eine untere Schicht auf. Die Schichten weisen unterschiedliche Materialeigenschaften auf, die vorteilhaft für die spezielle Anwendung bei Hartfußbodenpaneelen und Laminatfußbodenpaneelen sind.

Die obere Schicht und die untere Schicht können insbesondere eine größere Dichte, eine größere Elastizität und/oder eine kleinere Offenporigkeit als die Mittelschicht aufweisen.

Als Materialien für die Mittelschicht und die obere und die untere Schicht kommen beliebige Holzmaterialien in Frage. So kann beispielsweise die Mittelschicht aus einem Spanplattenmaterial und die obere Schicht und die untere Schicht aus MDF-Material oder HDF-Material hergestellt sein. Ebenso können unterschiedliche Spangrößen des Spanplattenmaterials ausgenutzt werden, indem für die Mittelschicht die Späne im Mittel größer sind als die Späne in den äußeren Lagen. Auch dadurch lassen sich die unterschiedlichen Dichten der Mittelschicht einerseits und der oberen und unteren Schichten andererseits erreichen.

Die vorliegende Erfindung vereint also insbesondere die jeweiligen Vorteile der Trägerwerkstoffe einer HDF-Platte und einer Spanplatte in der Form, dass eine Span-Faser-Kombinationsplatte verwendet wird, deren mittlerer Bereich aus einer Spanplatte und deren beiden äußeren Bereiche aus einer MDF- oder HDF-Platte bestehen.

Das erfindungsgemäße Verfahren zeichnet sich durch die folgenden Schritte aus:
- vorbeleimte Holzspäne und vorbeleimte Holzfasern werden hergestellt,
- aus den vorbeleimten Holzfasern und den vorbeleimten Holzspänen wird ein Formling hergestellt, wobei der Formling eine untere Faserlage, eine mittlere Spänelage und eine obere Faserlage aufweist,
- anschließend wird unter Anwendung von Druck und Temperatur der Formling gepresst, wobei die Holzspänelage die Mittelschicht und die Faserlagen die untere Schicht und die obere Schicht bilden, und
- anschließend wird die Trägerplatte mit einer Deckschicht und einer Gegenzugschicht beschichtet,
- zunächst wird ein erster Formling aus dem Holzfasermaterial hergestellt,
- der erste Formling wird in eine obere Faserlage und eine untere Faserlage aufgeteilt,
- auf die untere Faserlage wird eine Spänelage aufgebracht und
- die obere Faserlage wird auf die Spänelage aufgelegt.

Das erfindungsgemäße Verfahren wurde zuvor anhand von Span- und Fasermaterialien beschrieben. Das Verfahren kann auch mit verschiedenen Spanmaterialien durchgeführt werden, die sich durch verschieden große mittlere Spangrößen unterscheiden und zu unterschiedlichen Dichten führen.

Die unterschiedlichen Ausgestaltungen des Verfahrens werden nachfolgend beschrieben.

Im Folgenden wird die Erfindung anhand von Ausführungsbeispielen näher erläutert, wobei auf die beigefügte Zeichnung Bezug genommen wird. In der Zeichnung zeigen
Fig. 1 ein aus dem Stand der Technik bekanntes Ausführungsbeispiel einer Fußbodenplatte,
Fig. 2 ein weitere aus dem Stand der Technik bekanntes Ausführungsbeispiel einer Fußbodenplatte
Fig. 3 ein erstes Ausführungsbeispiel eines Bauelements,
Fig. 4 ein zweites Ausführungsbeispiel eines Bauelements,
Fig. 5 ein erstes Verfahren zur Herstellung eines Bauelements und
Fig. 6 ein zweites Verfahren zur Herstellung eines Bauelements.

Im Folgenden wird die Erfindung im Detail erläutert, wobei die Ausführungsbeispiele jeweils auf die Materialien Spanplattenmaterial einerseits und Faserplattenmaterial andererseits spezifiziert sind. Dieses soll jedoch nicht beschränkend verstanden werden, da - wie oben erläutert - auch andere Materialzusammensetzungen wie Spanmaterialien mit unterschiedlich großen mittleren Spanabmessungen gewählt werden können.

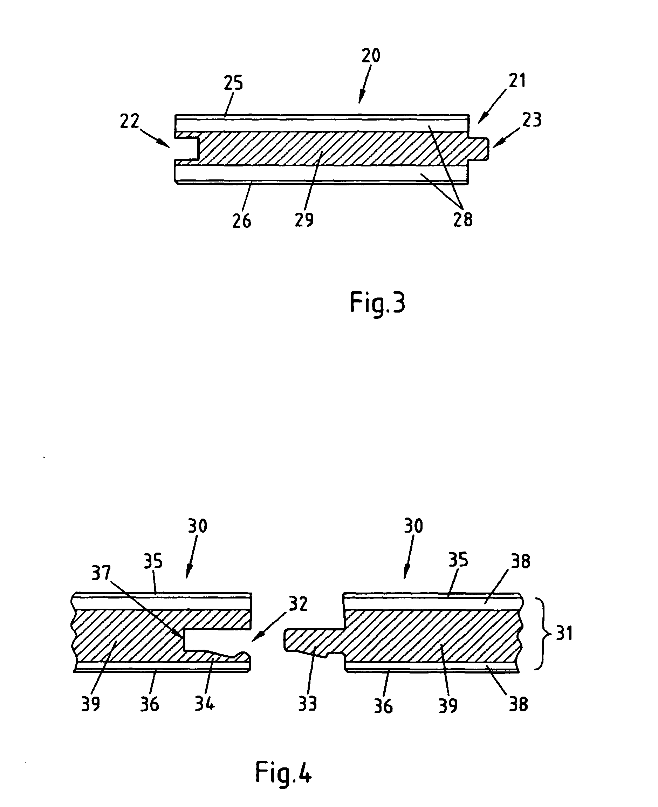

Fig. 3 zeigt ein erstes Ausführungsbeispiel eines Fußbodenpaneels 20 mit einer Trägerplatte 21. Die Mittellage besteht aus einer Späneschicht 29 und die beiden äußeren Schichten bestehen aus den Faserschichten 28 die zusammen mit der Späneschicht 29 die Trägerplatte 21 bilden. Die beiden äußeren Schichten 28 sind wiederum mit einer oberen Beschichtung 25 und ggf. mit einer unteren Beschichtung 26 verbunden. Damit lassen sich alle technologischen Vorteile der Spanplatte hinsichtlich der Dichte, der Elastizität und Porosität mit den Vorteilen der HDF-Platte hinsichtlich Toleranzen, Oberflächenruhe und Druckfestigkeit vereinen.

Die Späneschicht 29 erstreckt sich über den ausgeformten Bereich der Nut 22 bzw. Feder 23, und oberhalb und unterhalb der Späneschicht 29 schließen sich die Faserschichten 28 beidseitig an. Mit anderen Worten sind die Nut 22 und die Feder 23 vollständig aus dem Material der Mittelschicht ausgebildet. Dieses hat den Vorteil, dass die Materialeigenschaften des Spanplattenmaterials für die Nut-Feder-Verbindung ausgenutzt wird, während die größere Dichte der oberen und der unteren Schichten vorteilhaft für das Fußbodenpaneel 20 ausgenutzt wird.

Fig. 4 zeigt den zuvor beschriebenen Aufbau für eine mechanisch verriegelbare Kantenausformung. Die beiden Paneele 30 weisen - wie in Fig. 2 ebenfalls dargestellt - eine Nut 32 und eine Feder 33 auf. Die Feder 33 weist ein nach unten vorstehendes Rastelement auf, das mit einem Rastorgan 34 in mechanischen Eingriff gebracht werden kann. Beim vorliegenden Ausführungsbeispiel geschieht dieses durch horizontales Zusammenschieben. Während des Zusammenschiebens kommt es zu einer elastischen Verformung, wie auch schon in Bezug auf Fig. 2 im Detail beschrieben wurde. Auch in dem in Fig. 4 dargestellten Ausführungsbeispiel weist die Trägerplatte obere und untere Schichten 38 sowie eine Mittelschicht 39 auf, wobei die Mittelschicht 39 eine Späneschicht und die obere und untere Schicht 38 jeweils eine Faserschicht ist. Insbesondere die besseren elastischen Eigenschaften der Mittelschicht 39 werden bei dem mechanisch verriegelnden Profil ausgenutzt, da es wesentlich darauf ankommt, dass das Rastorgan 34, also die untere Begrenzung der Nut 32 während des Verriegelungsvorganges elastisch verformt werden kann.

Die Dicke einer solchen Platte liegt in der Regel zwischen 5 und 15 mm. Dünnere und dickere Platten können für bestimmte Anwendungen aber ebenso sinnvoll sein.

Das spezifische Gewicht der Platte kann zwischen 550 und 950 kg/m³ betragen, wobei für die Verwendung als Trägerplatte für einen Laminatfußboden eine Dichte zwischen 800 und 900 kg/m³ als besonders geeignet angesehen werden kann.

Das Masseverhältnis von Spänen:Fasern (Summe aus beiden äußeren Schichten) kann zwischen 1:5 und 5:1 betragen, wobei ein symmetrischer oder auch asymmetrischer Aufbau angestrebt werden kann.

Fußbodendielen werden in der Regel über ein unterschiedliches Zugverhalten der oberen und unteren Beschichtung leicht zur Oberseite hin bombiert hergestellt. Eine Bombierung lässt sich auch bei einem asymmetrischen Aufbau der Trägerplatte derart erreichen, dass die beiden äußeren Faserlagen 28 nicht über dieselbe Stärke verfügen.

Relative Dickenunterschiede der beiden äußeren Schichten von etwa 10 bis 30% reichen durchwegs aus durch die Asymmetrie eine bombierte Diele zu erzeugen. Die unterschiedlichen Dicken sind in den Fig. 3 und 4 schematisch dargestellt.

Der Kostenvorteil der Kombinationsplatte im Vergleich zur HDF-Platte ergibt sich aus der Tatsache, dass getrocknete Fasern im Vergleich zu getrockneten Spänen etwa doppelt so teuer sind.

Kostenvorteile ergeben sich dann, wenn die Herstellung wie nachfolgend beschrieben erfolgt. Fasern werden nach dem Stand der Technik durch einen thermo-mechanischen Aufschluss hergestellt, nach dem Passieren des Zerfaserers (Refiner) mit Bindemittel gemischt und im Anschluss daran getrocknet. Die Zumischung des Bindemittels kann auch nach dem Trocknen erfolgen oder in zwei Stufen mit einer Zumischung eines Teils des Bindemittels vor und eines Teil des Bindemittels nach dem Trocknen.

Die Späne werden ebenfalls nach dem Stand der Technik hergestellt durch Trocknen von Spänen, mit anschließender Nachzerkleinerung und Fraktionierung durch Sieben. Das Bindemittel wird den getrockneten Spänen zugemischt.

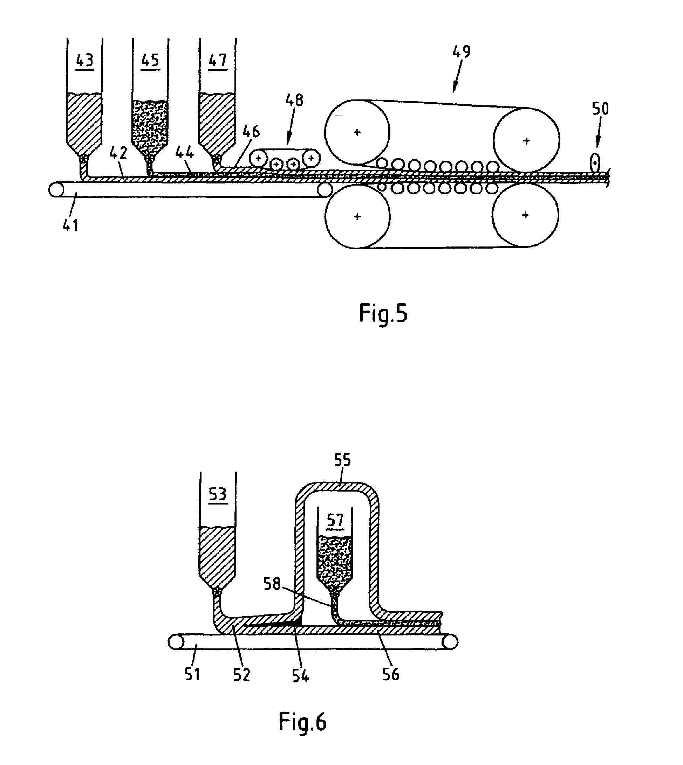

Aus den beiden Rohstoffen wird nun ein Formling aus einer unteren Lage Fasern, einer mittleren Lage Spänen und einer oberen Lage Fasern gebildet. Das kann zum Beispiel nach dem Verfahren wie in Fig. 5 dargestellt erfolgen, wobei auf ein Formband 41 die untere Faserlage 42 mittels einer Faserstreuvorrichtung 43 gebildet aufgetragen wird, darauf die Spänelage 44 mit einer Streuvorrichtung 45 und die obere Faserlage 46 mit einer Streuvorrichtung 47. Der so erhaltene 3-schichtige Formling wird dann durch die Vorpresse 48 vorverdichtet und der Heißpresse 49 zugeführt, in welcher durch die Einwirkung von Druck und Temperatur eine stabile Platte geformt wird. Der relative Massenanteil der einzelnen Lagen zueinander kann sehr einfach über die ausgetragene Materialmenge der Streuvorrichtungen 43, 45 und 47 gesteuert werden, wodurch ein symmetrischer Ausbau aber auch ein asymmetrischer Aufbau erzielt werden kann.

Das Plattenendlosband wird mit einer Diagonalsäge 50 in Einzelformate aufgetrennt und nach dem Stand der Technik weiterbearbeitet wie Kühlen, Schleifen und Beschichten.

Die Möglichkeit der separaten Beleimung der Fasern und der Späne erlaubt es auch unterschiedliche Bindemitteltypen zu verwenden. Zielsetzung davon ist einerseits die mechanischtechnologischen Eigenschaften zu optimieren (wie beispielsweise Quellungsverhalten, Beschichtungsverhalten, Elastizität und Formaldehydabgabe) und andererseits die Leistungsfähigkeit der Presse zu steigern. In der Regel kommen als Bindemittel Kondensationsharze zum Einsatz wie Harnstoff-Formaldehyd-Harze (UF), Melamin-Formaldehyd-Harze (MF) und Phenol-Formaldehyd-Harze (PF) bzw. Mischungen aus diesen oder Isocyanat (PMDI). Eine beispielhafte Kombination ist die Verwendung eines MUF-Bindemittels für die beiden äußeren Faserlagen und eines Isocyanats für die Spänelage. Damit kann die Formaldehydabgabe einerseits verringert werden, da Isocyanat kein formaldehydbasierendes Bindemittel ist, zum anderen benötigt Isocyanat Wasser zum Abbinden, das im Zuge der Einwirkung von Druck und Temperatur durch den sogenannten Dampfstoßeffekt von den heißen Faseraußenbereichen zu der kalten Spänemittellage diffundiert. So wird einerseits Wasser durch das Isocyanat gebunden und die Abbindung des Isocyanats beschleunigt, was zu einer stabileren Produktion führt (weniger Plattenspalter am Pressenauslauf) und zu einer Beschleunigung der Herstellung.

Die Verwendung unterschiedlicher Bindemittel der oberen und unteren Faserlage ist aber ebenso denkbar. Ermöglicht wird das beispielsweise, wenn eine getrennte Beleimung der oberen und unteren Fasern möglich ist, entweder durch 2 separate Zerfaserer und Trockner oder durch eine einem Trockner nachgeschaltene getrennte Trockenbeleimung für die beiden Faserströme.

Fig. 6 zeigt ein Ausführungsbeispiel des erfindungsgemäßen Verfahrens zur Herstellung einer Span-Faser-Kombinationsplatte. Ein Faserkuchen 52 wird mittels einer Streuvorrichtung 53 hergestellt und anschließend durch eine Teilvorrichtung 54 in eine obere Faserlage 55 und eine untere Faserlage 56 getrennt. Die Teilvorrichtung kann als wie ein Messer wirkender Keil ausgebildet sein, der Einsatz schneidender Werkzeuge zur Faserformlingtrennung ist aber ebenso möglich. Die Steuerung des Masseanteils der unteren Faserlage 56 und der oberen Faserlage 55 ist durch die Position der Teilvorrichtung 54 in Bezug auf die Dicke des Faserformlings 52 möglich. Die Faserlage 55 wird über die Spänestreuvorrichtung 57 geführt, die ihrerseits eine Spänelage 58 auf die untere Faserlage 56 legt. Nach der Streuvorrichtung 57 wird die obere Faserlage 55 auf die Spänelage 58 gelegt und man erhält einen 3-lagigen Formling für eine Kombinationsplatte, der in weiterer Folge nach entsprechender Vorverdichtung und dem Heißpressen wie in Fig. 5 dargestellt eine stabile Platte ergibt.

## Patentansprüche

1. Verfahren zur Herstellung eines Bauelements,
- bei dem vorbeleimte Holzspäne und vorbeleimte Holzfasern hergestellt werden,
- bei dem aus den vorbeleimten Holzfasern und den vorbeleimten Holzspänen ein Formling hergestellt wird, wobei der Formling eine untere Faserlage (42), eine mittlere Spänelage (44) und eine obere Faserlage (46) aufweist,
- bei dem anschließend unter Anwendung von Druck und Temperatur der Formling gepresst wird, wobei die Holzspänelage (44) die Mittelschicht und die Faserlagen (42, 46) die untere Schicht und die obere Schicht bilden, und
- wobei anschließend die Trägerplatte mit einer Deckschicht und einer Gegenzugschicht beschichtet wird
**dadurch gekennzeichnet,**
- **dass** zunächst ein erster Formling (52) aus dem Holzfasermaterial hergestellt wird,
- **dass** der erste Formling (52) in eine obere Faserlage (55) und eine untere Faserlage (56) aufgeteilt wird, dass auf die untere Faserlage (56) eine Spänelage (58) aufgebracht wird und
- **dass** die obere Faserlage (55) auf die Spänelage (58) aufgelegt wird.

2. Verfahren nach Anspruch 1,
bei dem die Holzspäne und die Holzfasern mit unterschiedlichen Bindemitteln beleimt werden.

3. Verfahren nach Anspruch 2,
bei dem die Holzspäne der Mittelschicht mit einem Isocyanat beleimt werden und die Holzfasern der oberen Schicht und der unteren Schicht mit einem MUF-Bindemittel beleimt werden.

## Claims

1. A method for producing a structural element,
- in which pre-glue-coated wood chips and pre-glue-coated wood fibres are produced,
- in which a blank is produced from the pre-glue-coated wood fibres and the pre-glue-coated wood chips, wherein the blank has a lower fibre layer (42), a central chip layer (44) and an upper fibre layer (46),
- in which the blank is subsequently pressed by applying pressure and temperature, wherein the wood chip layer (44) forms the central layer and the fibre layers (42, 46) form the lower layer and the upper layer, and
- wherein the base plate is subsequently coated with a covering layer and stabilising layer,
**characterised in**
- **that** a first blank (52) is first produced from the wood fibre material,
- **that** the first blank (52) is divided into an upper fibre layer (55) and a lower fibre layer (56),
- **that** a chip layer (58) is applied to the lower fibre layer (56) and
- **that** the upper fibre layer (55) is applied to the chip layer (58).

2. The method according to claim 1, in which the wood chips and the wood fibres are glue-coated with different binders.

3. The method according to claim 2, in which the wood chips of the central layer are glue-coated with an isocyanate and the wood fibres of the upper layer and the lower layer are glue-coated with an MUF binder.

## Revendications

1. Procédé pour la fabrication d'un élément de construction
- dans lequel des copeaux de bois préencollés et des fibres de bois préencollées sont produits,
- dans lequel, à partir des fibres de bois préencollées et des copeaux de bois préencollés, est fabriquée une ébauche, ladite ébauche présentant une couche de fibres inférieure (42), une couche de copeaux médiane (44) et une couche de fibres supérieure (46),
- dans lequel l'ébauche est ensuite pressée, en étant soumise à pression et température, la couche de copeaux de bois (44) formant la couche médiane, et les couches de fibres (42, 46) formant la couche inférieure et la couche supérieure, et
- dans lequel la plaque de support est ensuite revêtue d'une couche de recouvrement et d'une couche à contretraction,
**caractérisé en ce**
- **que** l'on fabrique d'abord une première ébauche (52) en matériau en fibres de bois,
- **que** la première ébauche (52) est divisée en une couche de fibres supérieure (55) et en une couche de fibres inférieure (56),
- **que** sur la couche de fibres inférieure (56) est appliquée une couche de copeaux (58), et
- **que** la couche de fibres supérieure (55) est posée sur la couche de copeaux (58).

2. Procédé selon la revendication 1,
dans lequel les copeaux de bois et les fibres de bois sont encollés avec des liants différents.

3. Procédé selon la revendication 2,
dans lequel les copeaux de bois de la couche médiane sont encollés avec un isocyanate et les fibres de bois de la couche supérieure et de la couche inférieure sont encollés avec un liant MUF.
